# EUROPEAN PATENT APPLICATION

(11) **EP 4 357 741 A1**
(43) Date of publication of application: **24.04.2024**
(21) Application number: 22824171.7
(22) Date of filing: 14.06.2022
(51) Int. Cl.: G01J 3/42, G01N 21/25

(54) **METHOD AND SYSTEM FOR MEASURING SPECTRAL REFLECTIVITY**

(30) Priority: 15.06.2021 CN 202110660535
(71) Applicant: Hangzhou Hikvision Digital Technology Co., Ltd., Hangzhou, Zhejiang 310051 (CN)
(72) Inventor: YAO, Xinli, Hangzhou, Zhejiang 310051 (CN); ZHU, Yonghao, Hangzhou, Zhejiang 310051 (CN); ZHU, Zhenfeng, Hangzhou, Zhejiang 310051 (CN); CAI, Hong, Hangzhou, Zhejiang 310051 (CN); ZHANG, Shifeng, Hangzhou, Zhejiang 310051 (CN); MAO, Hui, Hangzhou, Zhejiang 310051 (CN); PU, Shiliang, Hangzhou, Zhejiang 310051 (CN); XU, Peng, Hangzhou, Zhejiang 310051 (CN)
(74) Representative: Goddar, Heinz J.
(86) International application number: PCT/CN2022/098513
(87) International publication number: WO 2022/262692

(57) **Abstract**

A spectral reflectivity measurement system. The system includes an ambient light sensing module (11), a target spectrum collection module (12) and a data processing module (13). The ambient light sensing module (11) is configured to collect a measured ambient light spectrum at a target measurement time, and send the measured ambient light spectrum to the data processing module (13); the target spectrum collection module (12) is configured to collect a measured target spectrum at the target measurement time, and send the measured target spectrum to the data processing module (13); the data processing module (13) is configured to determine the measured ambient light spectrum and the measured target spectrum at same target wavelengths, and determine a measured reference spectrum based on the measured ambient light spectrum and a determined mapping parameter, where the measured reference spectrum is a spectrum of second ambient light; determine, based on the measured target spectrum and the measured reference spectrum, a spectral reflectivity of a to-be-measured object; where the mapping parameter refers to a mapping relationship between reference spectrum and ambient light spectrum. Further disclosed is a spectral reflectivity measurement method. By using the spectral reflectivity measurement system and the spectral reflectivity measurement method, the spectral reflectivity of the to-be-measured object can be accurately determined.

## Description

### TECHNICAL FIELD

The present disclosure relates to the field of optical processing technologies, and in particular to a method and system for measuring spectral reflectivity.

### BACKGROUND

Hyperspectral imaging refers to combining imaging technology with hyperspectral technology to obtain a two-dimensional geometric space and one-dimensional spectral information of a to-be-measured object as well as image data of a continuous narrow band with hyperspectral resolution.

The hyperspectral technology is a technology which uses very narrow and continuous spectral channels (different from three channels of Red Green and Blue (RGB) and the like) to obtain spectral information of a to-be-measured object, in this technology, electromagnetic wave data (i.e., spectral information) of multiple spectral channels for the to-be-measured object can be collected, and then based on the features of these data, interested information of the to-be-measured object, such as molecular composition, relative content, material type and the like is obtained. In the remote sensing or substance measurement field, the spectral information of a to-be-measured object can be obtained based on a reflected light intensity of a to-be-measured object. However, due to inconsistency of the spectral components of the irradiation light sources, spectral lines obtained under different light sources are inconsistent. Therefore, the spectral information of the to-be-measured object cannot be obtained based only on the reflected light intensity of the to-be-measured object.

In order to solve the problem that spectral lines obtained under different light sources are inconsistent due to inconsistency of the spectral components of the irradiation light sources, a spectral reflectivity may be taken as an evaluation feature of a to-be-measured object, that is, spectral information of the to-be-measured object is obtained in combination with the spectral reflectivity. The spectral reflectivity refers to a ratio of a luminous flux of reflected light of a to-be-measured object in a wave band to a luminous flux of incident light of this wave band.

In conclusion, calculating a spectral reflectivity of a to-be-measured object is an important part for realizing hyperspectral imaging. However, till now, there is no effective implementation for accurately calculating the spectral reflectivity of the to-be-measured object.

### SUMMARY

The present disclosure provides a spectral reflectivity measurement system. The spectral reflectivity measurement system includes an ambient light sensing module, a target spectrum collection module and a data processing module, where,
the ambient light sensing module is configured to collect a measured ambient light spectrum at a target measurement time, and send the measured ambient light spectrum to the data processing module, where the measured ambient light spectrum is spectrum of first ambient light, and the first ambient light is ambient light sensed by the ambient light sensing module;
the target spectrum collection module is configured to collect a measured target spectrum at the target measurement time, and send the measured target spectrum to the data processing module, where the measured target spectrum is spectrum reflected by a to-be-measured object for second ambient light, and the second ambient light is ambient light sensed by the target spectrum collection module; and
the data processing module is configured to determine the measured ambient light spectrum and the measured target spectrum at the same target wavelengths, and determine a measured reference spectrum based on the measured ambient light spectrum and a determined mapping parameter, where the measured reference spectrum is a spectrum of the second ambient light; determine, based on the measured target spectrum and the measured reference spectrum, a spectral reflectivity of the to-be-measured object; where the mapping parameter refers to a mapping relationship between reference spectrum and ambient light spectrum.

The present disclosure provides a spectral reflectivity measurement method. The method includes: determining a measured ambient light spectrum and a measured target spectrum at the same target wavelengths; where a collection time of the measured ambient light spectrum is same as a collection time of the measured target spectrum; the measured ambient light spectrum is a spectrum of first ambient light, and the measured target spectrum is a spectrum reflected by a to-be-measured object for second ambient light; based on the measured ambient light spectrum and a determined mapping parameter, determining a measured reference spectrum, where the measured reference spectrum is a spectrum of the second ambient light, and the mapping parameter represents a mapping relationship between reference spectrum and ambient light spectrum; based on the measured target spectrum and the measured reference spectrum, determining a spectral reflectivity of the to-be-measured object.

From the above technical solutions, it can be seen that in the embodiments of the present disclosure, a mapping parameter between reference spectrum and ambient light spectrum may be pre-determined, and thus, based on a measured ambient light spectrum and a measured target spectrum at the same target wavelengths and the mapping parameter, a spectral reflectivity of a to-be-measured object can be determined. Hence, the spectral reflectivity of the to-be-measured object can be accurately calculated, so as to realize fast, real-time, efficient and accurate acquisition of the spectral reflectivity of the to-be-measured object. In this way, the spectral reflectivity of the to-be-measured object can be obtained continuously in real time in the wild, thus improving the convenience and the real-timeness of obtaining the spectral reflectivity of the ground object (i.e., the to-be-measured object) in the wild. During use, by simply using a calibration object (e.g., standard whiteboard) to perform one calibration (i.e., to determine the mapping parameter) without repeatedly collecting the data of the calibration object, the spectral reflectivities under different weathers at different solar altitude angles can be obtained, and further, by calibrating the solar altitude angle and/or pose angle or the like, the calculation accuracy of the spectral reflectivities in multiple use cases can be improved.

### BRIEF DESCRIPTION OF DRAWINGS

To describe the technical solutions in the embodiments of the present disclosure more clearly, drawings required in descriptions of the embodiments of the present disclosure will be briefly introduced below. It is apparent that the drawings described below are merely some embodiments of the present disclosure and other drawings may be obtained by those of ordinary skill in the prior art based on these drawings in the embodiments of the present disclosure.
FIG. 1 is a structural schematic diagram illustrating a spectral reflectivity measurement system according to an embodiment of the present disclosure.
FIG. 2A to FIG. 2B are schematic diagrams illustrating deployment of a spectral reflectivity measurement system according to an embodiment of the present disclosure.
FIG. 3 is a schematic diagram illustrating a process of determining a mapping parameter according to an embodiment of the present disclosure.
FIG. 4 is a schematic diagram illustrating a calculation process of a spectral reflectivity according to an embodiment of the present disclosure.
FIG. 5A to FIG. 5F are structural schematic diagrams illustrating a spectral reflectivity measurement system according to an embodiment of the present disclosure.
FIGS. 6A to 6C are schematic diagrams illustrating an actual scenario application according to an embodiment of the present disclosure.
FIG. 7 is a flowchart illustrating a spectral reflectivity measurement method according to an embodiment of the present disclosure.

### DETAILED DESCRIPTION

The terms used in the embodiments of the present disclosure are for the purpose of describing particle embodiments only, and are not intended to limit the present disclosure. The singular forms such as "a," 'said," and "the" used in the present disclosure and the appended claims are also intended to include multiple, unless the context clearly indicates otherwise. It is also to be understood that the term "and/or" as used herein refers to and includes any or all possible combinations of one or more associated listed items.

It should be understood that although different information may be described using the terms such as first, second, third, etc. in the embodiments of the present disclosure, these information should not be limited to these terms. These terms are used only to distinguish one type of information from another. For example, without departing from the scope of the present disclosure, the first information may also be referred to as the second information and similarly, the second information may also be referred to as the first information. Depending on the context, the word "if' as used herein may be interpreted as "when" or "upon" or "in response to determining".

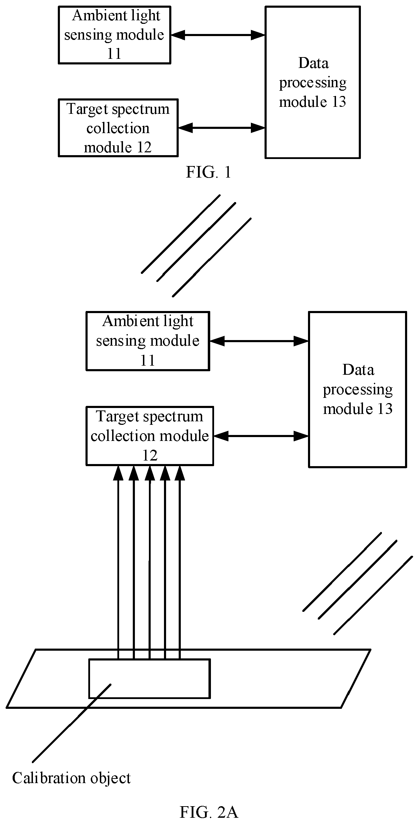

In an embodiment of the present disclosure, there is provided a spectral reflectivity measurement system. FIG. 1 is a structural schematic diagram illustrating the spectral reflectivity measurement system. As shown in FIG. 1, the spectral reflectivity measurement system includes at least: an ambient light sensing module 11, a target spectrum collection module 12 and a data processing module 13.

The ambient light sensing module 11 is configured to collect a measured ambient light spectrum at a target measurement time, and send the measured ambient light spectrum to the data processing module 13, where the measured ambient light spectrum is spectrum of first ambient light, and the first ambient light is ambient light sensed by the ambient light sensing module 11. For example, for all ambient light, the ambient light sensing module 11 can sense a part of the ambient light, which is the first ambient light. The first ambient light may have different values at different times. The measured ambient light spectrum is spectrum corresponding to the first ambient light.

The target spectrum collection module 12 is configured to collect a measured target spectrum at the target measurement time (the measurement time of the measured ambient light spectrum), and send the measured target spectrum to the data processing module 13, where the measured target spectrum may be spectrum reflected by a to-be-measured object for second ambient light, and the second ambient light is ambient light sensed by the target spectrum collection module 12. For example, for all ambient light, the target spectrum collection module 12 can sense a part of the ambient light, which is the second ambient light. The second ambient light is different from the first ambient light. The second ambient light may have different values at different times. The measured target spectrum is spectrum reflected by the to-be-measured object for the second ambient light.

The data processing module 13 is configured to determine the measured ambient light spectrum and the measured target spectrum at the same target wavelengths, and based on the measured ambient light spectrum and a determined mapping parameter, determine a measured reference spectrum. Illustratively, the measured reference spectrum may be a spectrum of the second ambient light, and the mapping parameter may be used to represent a mapping relationship between reference spectrum and ambient light spectrum. The data processing module 13 may also determine a spectral reflectivity of the to-be-measured object based on the measured target spectrum and the measured reference spectrum.

In a possible implementation, the ambient light sensing module 11 is configured to collect the measured ambient light spectrum for each wavelength of a first wavelength set, and the target spectrum collection module 12 is configured to collect the measured target spectrum for each wavelength of a second wavelength set, where the first wavelength set is a subset of the second wavelength set. The data processing module 13, when determining the measured ambient light spectrum and the measured target spectrum at the same target wavelengths, is configured to: take each wavelength in the second wavelength set as the target wavelength, and for each target wavelength: obtain the measured target spectrum at the target wavelength from the target spectrum collection module 12; determine whether the target wavelength is present in the first wavelength set; if yes, obtain the measured ambient light spectrum at the target wavelength from the ambient light sensing module 11; if not, determine the measured ambient light spectrum at the target wavelength based on the measured ambient light spectrum at at least two wavelengths collected by the ambient light sensing module 11. For example, a first matching wavelength and a second matching wavelength are selected from the first wavelength set, where the first matching wavelength is a wavelength in the first wavelength set closest to the target wavelength and smaller than the target wavelength, and the second matching wavelength is a wavelength in the first wavelength set closest to the target wavelength and larger than the target wavelength; based on the measured ambient light spectrum at the first matching wavelength, and the measured ambient light spectrum at the second matching wavelength, the measured ambient light spectrum at the target wavelength is determined.

In a possible implementation, the data processing module 13 is further configured to determine a maximum spectrum value in the measured ambient light spectrum and the measured target spectrum. If the maximum spectrum value is less than a preset minimum spectrum value, the data processing module 13 is configured to adjust a first exposure time currently used by the ambient light sensing module 11 to a second exposure time, where the second exposure time is greater than the first exposure time; control the ambient light sensing module 11 to collect the measured ambient light spectrum based on the second exposure time, and control the target spectrum collection module 12 to collect the measured target spectrum based on the second exposure time. Alternatively, if the maximum spectrum value is greater than a preset maximum spectrum value, the data processing module 13 is configured to adjust the first exposure time currently used by the ambient light sensing module 11 to a third exposure time, where the third exposure time is less than the first exposure time; control the ambient light sensing module 11 to collect the measured ambient light spectrum based on the third exposure time, and control the target spectrum collection module 12 to collect the measured target spectrum based on the third exposure time.

In a possible implementation, the ambient light sensing module 11 may also collect position data and send the position data to the data processing module 13. The data processing module 13, when determining the measured reference spectrum based on the measured ambient light spectrum and the determined mapping parameter(s), is configured to: based on the position data, determine an angle parameter, and based on the measured ambient light spectrum, the angle parameter(s) and the mapping parameter(s), determine the measured reference spectrum; where the mapping parameter represents a mapping relationship among reference spectrum, ambient light spectrum and angle parameter.

Illustratively, if the position data is pose information of the ambient light sensing module 11, the angle parameter is a pose angle corresponding to the pose information; and/or, if the position data is longitude and latitude information of the ambient light sensing module 11, the angle parameter is a zenith angle corresponding to the longitude and latitude information.

In a possible implementation, the determination process of the mapping parameter may include the following steps.

The ambient light sensing module 11 is configured to collect calibrated ambient light spectrum at a target calibration time, and send the calibrated ambient light spectrum to the data processing module 13, where the calibrated ambient light spectrum is spectrum of the first ambient light, and the first ambient light is ambient light sensed by the ambient light sensing module 11.

The target spectrum collection module 12 is configured to collect calibrated target spectrum at the target calibration time, and send the calibrated target spectrum to the data processing module 13, where the calibrated target spectrum is spectrum reflected by a calibration object for the second ambient light, and the second ambient light is ambient light sensed by the target spectrum collection module 12.

The data processing module 13 is configured to determine the calibrated ambient light spectrum and the calibrated target spectrum at the same target wavelengths, and based on the calibrated target spectrum and a configured spectral reflectivity for the calibration object, determine a calibrated reference spectrum, where the calibrated reference spectrum is a spectrum of the second ambient light; and the data processing module 13 is configured to, based on the calibrated reference spectrum and the calibrated ambient light spectrum, determine the mapping parameter, where the mapping parameter represents a mapping relationship between reference spectrum and ambient light spectrum.

In a possible implementation, the ambient light sensing module 11 may also collect position data and send the position data to the data processing module 13; the data processing module 13, when determining the mapping parameter based on the calibrated reference spectrum and the calibrated ambient light spectrum, is configured to: based on the position data, determine an angle parameter, and based on the angle parameter, the calibrated reference spectrum and the calibrated ambient light spectrum, determine the mapping parameter; where the mapping parameter represents a mapping relationship among reference spectrum, ambient light spectrum and angle parameter.

Illustratively, if the position data is pose information of the ambient light sensing module 11, the angle parameter is a pose angle corresponding to the pose information; and/or, if the position data is longitude and latitude information of the ambient light sensing module 11, the angle parameter is a zenith angle corresponding to the longitude and latitude information.

In a possible implementation, the ambient light sensing module 11 includes at least a light homogenization path and a multispectral sensor, where the light homogenization path is coupled to the multispectral sensor; the ambient light goes through the light homogenization path for light homogenization processing, and then is transmitted to the multispectral sensor which collects the measured ambient light spectrum of multiple wavelengths; or, the ambient light sensing module 11 includes at least a light homogenization path, an optical fiber, and an optical fiber spectrometer, one end of the optical fiber is connected to the optical fiber spectrometer, and the other end of the optical fiber is connected to the light homogenization path; the ambient light goes through the light homogenization path for light homogenization processing and then is transmitted to the optical fiber spectrometer through the optical fiber, and the optical fiber spectrometer collects the measured ambient light spectrum of multiple wavelengths. In the above implementation, a wavelength number of the measured ambient light spectrum collected by the optical fiber spectrometer is greater than a wavelength number of the measured ambient light spectrum collected by the multispectral sensor.

Illustratively, the ambient light sensing module 11 further includes a pose sensor and/or position sensor, the pose sensor is used to collect the pose information, and the position sensor is used to collect the longitude and latitude information.

In a possible implementation, the target spectrum collection module 12 includes at least a lens and an optical fiber spectrometer, and the lens is connected with the optical fiber spectrometer; the lens collects light formed after the ambient light is reflected by the to-be-measured object and then transmits the light to the optical fiber spectrometer, and the optical fiber spectrometer collects the measured target spectrum of multiple wavelengths; or, the target spectrum collection module 12 includes at least a lens and an imaging spectrometer, and the lens is connected with the imaging spectrometer; the lens collects light formed after the ambient light is reflected by the to-be-measured object and then transmits the light to the imaging spectrometer, and the imaging spectrometer collects the measured target spectrum of multiple wavelengths.

From the above technical solutions, it can be seen that, in the embodiments of the present disclosure, by pre-determining a mapping parameter between reference spectrum and ambient light spectrum, based on a measured ambient light spectrum and a measured target spectrum at the same target wavelengths and the mapping parameter, a spectral reflectivity of a to-be-measured object can be determined. Hence, the spectral reflectivity of the to-be-measured object can be accurately calculated so as to realize fast, real-time, efficient and accurate acquisition of the spectral reflectivity of the to-be-measured object. In this way, the spectral reflectivity of the to-be-measured object can be obtained continuously in real time in the wild, thus improving the convenience and the real-timeness of obtaining the spectral reflectivity of the ground object (i.e., the to-be-measured object) in the wild. During use, the spectral reflectivities under different weathers at different solar altitude angles can be obtained by simply using a calibration object (e.g., standard whiteboard) to perform one calibration (i.e., to determine the mapping parameter) without repeatedly collecting the data of the calibration object, and further, by calibrating the solar altitude angle and/or pose angle or the like, the calculation accuracy of the spectral reflectivities in multiple use cases can be improved.

The spectral reflectivity measurement system of the embodiments of the present disclosure will be described below in combination with specific application scenarios.

Before the technical solutions of the embodiments of the present disclosure are described, the concepts relating to the present disclosure will be introduced firstly.

Hyperspectral technology is a technology which uses very narrow and continuous spectral channels to obtain spectral information of a to-be-measured object. In this technology, electromagnetic wave data (i.e., spectral information) of multiple spectral channels of the to-be-measured object can be collected, and then based on the features of these data, interested information of the to-be-measured object, such as molecular composition, relative content, material type and the like is obtained. In the range from visible light to short-wave infrared band, the spectral resolution can measure up to nanometer level and usually has the characteristics of multiple bands, and the number of the spectral channels may be up to several hundred or higher, and the spectral channels are usually continuous. The hyperspectral imaging refers to combining imaging technology and hypersectral technology to obtain a two-dimensional geometric space and one-dimensional spectral information of a to-be-measured object as well as image data of a continuous narrow band of the hyperspectral resolution.

Spectral reflectivity: the spectral reflectivity refers to a ratio of a luminous flux of reflected light for a ground object in a wave band to a luminous flux of incident light in this wave band, namely, the ground object can realize selective reflection on the electromagnetic waves of different wavelengths, which is a characteristic of the ground object. The ground object is an object on ground surface (also called target object), which is referred to as to-be-measured object and calibration object in the embodiments of the present disclosure. The to-be-measured object is a ground object to be calculated for spectral reflectivity, and the calibration object is a ground object with known spectral reflectivity. Apparently, the calculation formula of the spectral reflectivity is that a target spectrum reflected by the ground object is divided by a reference spectrum of incident light received by the ground object.

When a light source irradiates on a surface of an object, the object may perform selective reflection on the electromagnetic waves of different wavelengths. The spectral reflectivity refers to a ratio of a luminous flux reflected by an object in a wave band to a luminous flux incident on the object, which is an attribute of the object surface. The spectral reflectivity, as a representation of an object itself for colors, records color information of the object and is a representation manner of a material of a surface of the object. The luminous flux is a radiation power sensible by human eyes, which is equal to a product of a radiation energy of a wave band and a relative visibility of this wave band within a unit time. The luminous flux in the embodiments of the present disclosure may be denoted as spectrum, namely, the luminous flux is represented by the spectrum.

Ambient light sensing: ambient light refers to solar light and its scattered light, and the ambient light sensing refers to obtaining a luminous flux of incident light when ambient light is incident on a ground object, and the luminous flux of incident light is often obtained by a sensor with multi-(hyper)spectral channels. The luminous flux of incident light is used to calculate a spectral reflectivity of the ground object.

Multispectral sensor: the multispectral sensor is a sensor which uses a photosensitive device with several broad (>10nm) but discontinuous spectral channels to obtain light intensity information of corresponding channels for a ground object, namely, it is used to obtain spectral information.

Cosine response: when light is irradiated on an imager (detector) in an inclined direction, light current output should conform to cosine rule, namely, the illuminance at this time should be equal to a product of a normal illuminance at the time of vertical incidence of light and an incidence angle cosine.

In situ: it refers to a site of occurrence of an event, that is, refers to that it is in an original, normal and natural location or position and will not change the position of a to-be-measured object nor damage the to-be-measured object by transportation or the like.

Ambient light spectrum: an ambient light sensing module 11 configured by the spectral reflectivity measurement system is configured to sense a spectrum of ambient light (luminous flux of incident light) and denote the spectrum as ambient light spectrum. It is noted that the ambient light sensing module 11 can sense only a part of all the ambient light, and for ease of distinguishment, the ambient light sensed by the ambient light sensing module 11 is referred to as first ambient light, i.e., the ambient light spectrum is a spectrum corresponding to the first ambient light, that is, a spectrum generated by the first ambient light.

Reference spectrum: a target spectrum collection module 12 configured by the spectral reflectivity measurement system is configured to sense a spectrum (i.e., luminous flux of reflected light) formed after the spectrum of the ambient light is reflected by an object. The spectrum of the ambient light before object reflection is a reference spectrum (i.e., luminous flux of incident light), and the spectrum of the ambient light (i.e., reference spectrum) is a spectrum sensed by the target spectrum collection module 12.

It is noted that the target spectrum collection module 12 cannot directly obtain the reference spectrum; the spectrum sensed by the target spectrum collection module 12 is referred to as reference spectrum, and the target spectrum collection module 12 obtains a spectrum after the reference spectrum is reflected by an object, namely, a spectrum after the reference spectrum is reflected.

The target spectrum collection module 12 can sense only a part of all the ambient light, and for ease of distinguishment, the ambient light sensed by the target spectrum collection module 12 is referred to as second ambient light, i.e., the reference spectrum is a spectrum corresponding to the second ambient light, that is, a spectrum generated by the second ambient light.

It should be noted that the second ambient light sensed by the target spectrum collection module 12 is different from the first ambient light sensed by the ambient light sensing module 11, and thus the reference spectrum is different from the ambient light spectrum. Since there is a difference between the reference spectrum and the ambient light spectrum, and the target spectrum collection module 12 cannot directly obtain the reference spectrum, it is required to calibrate a mapping relationship between reference spectrum and ambient light spectrum. In this case, after the ambient light spectrum is obtained, the reference spectrum can be derived based on the ambient light spectrum and the mapping relationship.

Target spectrum: a target spectrum collection module 12 configured by the spectral reflectivity measurement system is configured to sense a spectrum after the reference spectrum is reflected by an object, and denote the reflected spectrum as target spectrum (i.e., luminous flux of reflected light). Apparently, a spectrum obtained after the reference spectrum is reflected by an object is the target spectrum, namely, the target spectrum is equal to the reference spectrum multiplied by the spectral reflectivity of the object.

Due to the above relationship, if the reference spectrum and the target spectrum is known, the spectral reflectivity of the object can be obtained; if the target spectrum and the spectral reflectivity of the object are known, the reference spectrum can be obtained.

In order to calculate a spectral reflectivity of a to-be-measured object, an embodiment of the present disclosure provides a spectral reflectivity measurement system, which is an in-situ online real-time spectral reflectivity measurement system. In this system, a mapping parameter between reference spectrum and ambient light spectrum may be pre-calibrated and thus, the spectral reflectivity of the to-be-measured object can be accurately calculated so as to realize fast, real-time, efficient and accurate acquisition of the spectral reflectivity of the to-be-measured object. By pre-calibrating the spectral reflectivity measurement system using, for example, standard reflectivity board, the spectral reflectivity of the to-be-measured object can be obtained continuously in real time in the wild, improving the convenience and the real-timeness of obtaining the spectral reflectivity of a ground object (i.e., the to-be-measured object) in the wild. During use, the spectral reflectivity can be obtained by using a calibration object (e.g., standard whiteboard or standard reflectivity board) to perform one calibration (i.e., to determine the mapping parameter) without repeatedly collecting the data of the calibration obj ect.

In an embodiment of the present disclosure, the spectral reflectivity measurement system may include an ambient light sensing module 11, a target spectrum collection module 12, and a data processing module 13. The ambient light sensing module 11 is configured to obtain irradiation spectrum (i.e., ambient light spectra) of a target region at different times under different solar altitude angles, and send the ambient light spectrum to the data processing module 13. The target spectrum collection module 12 is configured to obtain an irradiation spectrum (i.e., target spectra) reflected by an object irradiated by the solar light at different times under different solar altitude angles, and send the target spectrum to the data processing module 13. The data processing module 13 is configured to perform preprocessing, exposure control, mapping parameter determination, spectral reflectivity calculation and data inversion and the like on the ambient light spectrum and the target spectrum.

The preprocessing function refers to preprocessings such as filtering and the like on input data (e.g., ambient light spectrum and the target spectrum). The exposure control function refers to, based on the ambient light spectrum and the target spectrum, automatically adjusting an exposure time and an average collection number of spectral data of the ambient light sensing module 11 and the target spectrum collection module 12. The mapping parameter calibration function refers to calibrating a difference between the ambient light sensing module 11 and the target spectrum collection module 12 in spectrum acquisition, and determining an input-output relationship of the spectral reflectivity measurement system, namely, calibrating the mapping parameter between reference spectrum and ambient light spectrum. The spectral reflectivity calculation function refers to calculating the spectral reflectivity of the to-be-measured object based on the calibrated mapping parameter, for example, the spectral reflectivity of the to-be-measured object is calculated based on the ambient light spectrum of the ambient light sensing module 11, the target spectrum of the target spectrum collection module 12 and the mapping parameter. The data inversion function refers to inputting the calculated spectral reflectivity into a substance parameter inversion model so as to perform inversion calculation of a specific parameter based on the spectral reflectivity of the to-be-measured object.

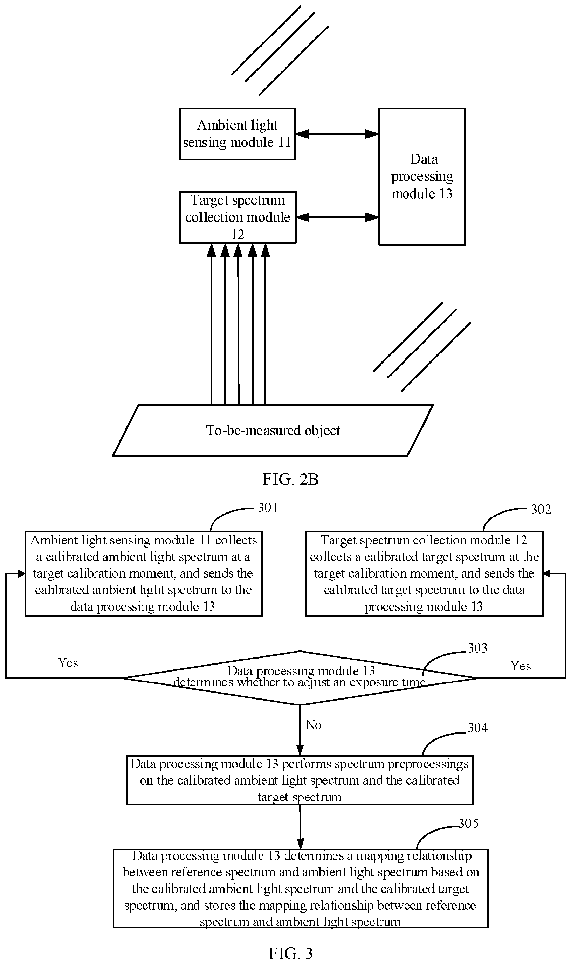

In an embodiment of the present disclosure, the process of determining the mapping parameter and the calculation of the spectral reflectivity of the to-be-measured object based on the calibrated mapping parameter are involved. In the process of determining the mapping parameter, a calibration object may be deployed below the spectral reflectivity measurement system, where the calibration object is an object with known spectral reflectivity. In this case, the mapping parameter between reference spectrum and ambient light spectrum is calibrated as shown in FIG. 2A. When the spectral reflectivity of the to-be-measured object is calculated based on the calibrated mapping parameter, the to-be-measured object is below the spectral reflectivity measurement system, and is an object with spectral reflectivity unknown, and the spectral reflectivity thereof needs to be calculated, as shown in FIG. 2B.

Illustratively, in the process of determining the mapping parameter, the ambient light spectrum, the reference spectrum and the target spectrum is involved. For ease of distinguishment, the ambient light spectrum in this process is referred to as calibrated ambient light spectrum, the reference spectrum in this process is referred to as calibrated reference spectrum, and the target spectrum in this process is referred to as calibrated target spectrum.

When the spectral reflectivity of the to-be-measured object is calculated based on the calibrated mapping parameter, the ambient light spectrum, the reference spectrum and the target spectrum is involved. The ambient light spectrum in this process is referred to as measured ambient light spectrum, the reference spectrum in this process is referred to as measured reference spectrum, and the target spectrum in this process is referred to as measured target spectrum.

The process of determining the mapping parameter may include steps 301 to 305, as shown in FIG. 3.

At step 301, the ambient light sensing module 11 collects calibrated ambient light spectrum at a target calibration time, and sends the calibrated ambient light spectrum to the data processing module 13. The calibrated ambient light spectrum may be spectrum of the first ambient light, and the first ambient light may be ambient light sensed by the ambient light sensing module 11.

At step 302, the target spectrum collection module 12 collects calibrated target spectrum at the target calibration time, and sends the calibrated target spectrum to the data processing module 13. The calibrated target spectrum is spectrum reflected by the calibration object for the second ambient light, and the second ambient light is ambient light sensed by the target spectrum collection module 12.

Illustratively, the calibration object is an object with known spectral reflectivity, for example, a whiteboard or a standard reflectivity board or the like. The type of the calibration object is not limited herein. In subsequent embodiments, descriptions are made with a whiteboard as an example.

Illustratively, in an outdoor open environment, it is guaranteed that the collection range of the target spectrum collection module 12 and the sensing range of the ambient light sensing module 11 are consistent in ambient light illuminance, and the upper and lower light environments thereof are not blocked by shades. The whiteboard is placed within the collection range of the target spectrum collection module 12, while the whiteboard can fully cover the collection range of the target spectrum collection module 12, as shown in FIG. 2A. After the position of the whiteboard is adjusted, the target spectrum collection module 12 and the ambient light sensing module 11 perform spectrum collection simultaneously, namely, collect the spectrum at the same time (the time is referred to as target calibration time). The spectrum collected by the ambient light sensing module 11 is the calibrated ambient light spectrum, and the spectrum collected by the target spectrum collection module 12 is the calibrated target spectrum.

The target calibration time may be multiple times, for example, a time T1, and a time T2 and the like. Therefore, the ambient light sensing module 11 may collect the calibrated ambient light spectrum at the time T1, and the target spectrum collection module 12 may collect the calibrated target spectrum at the time T1; the ambient light sensing module 11 may collect the calibrated ambient light spectrum at the time T2, and the target spectrum collection module 12 may collect the calibrated target spectrum at the time T2, and so on.

At step 303, the data processing module 13 determines whether to adjust an exposure time. If yes, the exposure time is adjusted, the data processing module 13 notifies the ambient light sensing module 11 to collect the calibrated ambient light spectrum based on the adjusted exposure time, that is, repeat the step 301, and also notifies the target spectrum collection module 12 to collect the calibrated target spectrum based on the adjusted exposure time, that is, repeat the step 302. If not, step 304 can be performed.

For example, after receiving the calibrated ambient light spectrum (may include multiple calibrated ambient light spectrum values) and the calibrated target spectrum (may include multiple calibrated target spectrum values), the data processing module 13 may determine a maximum value of all the calibrated ambient light spectrum and all the calibrated target spectra, and take the maximum value as a maximum spectrum value.

If the maximum spectrum value is less than a preset minimum spectrum value (configured based on experiences), a first exposure time is adjusted to a second exposure time greater than the first exposure time, that is, the value of the first exposure time is increased, where the first exposure time is an exposure time currently used by the ambient light sensing module 11 and the target spectrum collection module 12. Then, the data processing module 13 sends the second exposure time to the ambient light sensing module 11, and the ambient light sensing module 11 collects calibrated ambient light spectrum based on the second exposure time, that is, the ambient light sensing module 11 collects the ambient light spectrum under the second exposure time by repeating the step 301. Further, the data processing module 13 sends the second exposure time to the target spectrum collection module 12, and the target spectrum collection module 12 collects calibrated target spectrum based on the second exposure time, that is, the target spectrum collection module 12 collects the calibrated target spectrum under the second exposure time by repeating the step 302.

If the maximum spectrum value greater than a preset maximum spectrum value (configured based on experiences), the first exposure time is adjusted to a third exposure time less than the first exposure time, namely, the value of the first exposure time is decreased. Then, the data processing module 13 sends the third exposure time to the ambient light sensing module 11, and the ambient light sensing module 11 collects calibrated ambient light spectrum based on the third exposure time by repeating the step 301. Further, the data processing module 13 sends the third exposure time to the target spectrum collection module 12, and the target spectrum collection module 12 collects calibrated target spectrum based on the third exposure time by repeating the step 302.

If the maximum spectrum value is not less than the preset minimum spectrum value and not greater than the preset maximum spectrum value, that is, the maximum spectrum value is between the preset minimum spectrum value and the preset maximum spectrum value, it indicates that the first exposure time currently used by the ambient light sensing module 11 and the target spectrum collection module 12 is reasonable and does not need to be adjusted. The data processing module 13 determines not to adjust the exposure time and can perform the step 304.

In conclusion, since the solar light has noticeably different light intensities at different times and under different weathers, a unified exposure time cannot be used to obtain the calibrated ambient light spectrum and the calibrated target spectra. Therefore, the data processing module 13 may analyze whether the exposure time is proper, that is, whether to adjust the exposure time. If yes, the exposure time is adjusted, the ambient light sensing module 11 and the target spectrum collection module 12 are notified to adjust the exposure time.

At step 304, the data processing module 13 performs spectrum preprocessings such as data filtering, dark noise reduction and the like on the calibrated ambient light spectrum and the calibrated target spectra, which is not limited herein.

At step 305, the data processing module 13 determines a mapping relationship between reference spectrum and ambient light spectrum based on the calibrated ambient light spectrum and the calibrated target spectra, and stores the mapping relationship between reference spectrum and ambient light spectrum.

In a possible implementation, the implementation process of the step 305 may include step 3051 to step 3053.

At step 3051, a calibrated ambient light spectrum and a calibrated target spectrum at the same target wavelengths are determined.

Illustratively, for the calibrated ambient light spectrum and the calibrated target spectrum at the target calibration time, the calibrated ambient light spectrum may be calibrated ambient light spectrum of multiple wavelengths, and the calibrated target spectrum may be calibrated target spectrum of multiple wavelengths. For example, the ambient light sensing module 11 is configured to collect calibrated ambient light spectrum at each wavelength in a first wavelength set, and the target spectrum collection module 12 is configured to collect calibrated target spectrum at each wavelength in a second wavelength set, where the first wavelength set is a subset of the second wavelength set, for example, the first wavelength set includes a wavelength a1, a wavelength a3 and a wavelength a5, and the second wavelength set includes a wavelength a1, a wavelength a2, a wavelength a3, a wavelength a4, and a wavelength a5. Certainly, the above is only an example. The number of the wavelengths in the first wavelength set may be far greater than 3, for example, the wavelengths may be dozens of wavelengths, and the number of the wavelengths in the second wavelength set may be far greater than 5, for example, the wavelengths may be several hundred wavelengths, which is not limited herein. The number of the wavelengths may also be referred to as the number of spectral channels, for example, the number of spectral channels may be 3 or 5 or the like.

In conclusion, the data processing module 13 may obtain multiple calibrated ambient light spectrum and multiple calibrated target spectrum at the same target calibration time. For example, the data processing module 13 may obtain a calibrated ambient light spectrum b1 of the wavelength a1, a calibrated ambient light spectrum b3 of the wavelength a3, a calibrated ambient light spectrum b5 of the wavelength a5, a calibrated target spectrum c1 of the wavelength a1, a calibrated target spectrum c2 of the wavelength a2, a calibrated target spectrum c3 of the wavelength a3, a calibrated target spectrum c4 of the wavelength a4, and a calibrated target spectrum c5 of the wavelength a5.

The data processing module 13 may take each wavelength in the second wavelength set (e.g., the wavelength a1, the wavelength a2, the wavelength a3, the wavelength a4, and the wavelength a5) as a target wavelength. For the wavelength a1, the calibrated ambient light spectrum b1 and the calibrated target spectrum c1 are a calibrated ambient light spectrum and a calibrated target spectrum at the same target wavelength a1. For the wavelength a3, the calibrated ambient light spectrum b3 and the calibrated target spectrum c3 are a calibrated ambient light spectrum and a calibrated target spectrum at the same target wavelength a3. For the wavelength a5, the calibrated ambient light spectrum b5 and the calibrated target spectrum c5 are a calibrated ambient light spectrum and a calibrated target spectrum at the same target wavelength a5.

For the wavelength a2, since the wavelength a2 is not in the first wavelength set, based on at least two of the calibrated ambient light spectrum b1, the calibrated ambient light spectrum b3 and the calibrated ambient light spectrum b5, a calibrated ambient light spectrum corresponding to the wavelength a2 may be calculated, and denoted as the calibrated ambient light spectrum b2, where the calculation manner is not limited herein. For example, the calibrated ambient light spectrum b2 may be calculated in the following manner: a first matching wavelength and a second matching wavelength are selected from the first wavelength set, where the first matching wavelength is a wavelength closest to the wavelength a2 and less than the wavelength a2 in the first wavelength set, for example, the wavelength a1; the second matching wavelength is a wavelength closest to the wavelength a2 and greater than the wavelength a2 in the first wavelength set, for example, the wavelength a3. Then, based on the calibrated ambient light spectrum b1 of the wavelength a1 and the calibrated ambient light spectrum b3 of the wavelength a3, the calibrated ambient light spectrum b2 of the wavelength b2 is calculated, for example, interpolation operation, mean operation and weighted operation (a weight may be configured randomly) and the like may be performed on the calibrated ambient light spectrum b 1 and calibrated ambient light spectrum b3 to obtain the calibrated ambient light spectrum b2. This calculation manner is not limited herein as long as the calibrated ambient light spectrum b2 can be obtained.

Therefore, for the wavelength a2, the calibrated ambient light spectrum b2 and the calibrated target spectrum c2 are a calibrated ambient light spectrum and a calibrated target spectrum to the same target wavelength a2.

For the wavelength a4, since the wavelength a4 is not in the first wavelength set, the calibrated ambient light spectrum b4 corresponding to the wavelength a4 may be calculated. For example, based on the calibrated ambient light spectrum b3 of the wavelength a3 and the calibrated ambient light spectrum b5 of the wavelength a5, the calibrated ambient light spectrum b4 of the wavelength a4 may be calculated, which is not limited herein. For the wavelength a4, the calibrated ambient light spectrum b4 and the calibrated target spectrum c4 are a calibrated ambient light spectrum and a calibrated target spectrum at the same target wavelength a4.

In conclusion, the calibrated ambient light spectrum and the calibrated target spectrum corresponding to each target wavelength can be obtained. For each target wavelength, subsequent steps may be performed based on the calibrated ambient light spectrum and the calibrated target spectrum at the target wavelength to obtain a mapping parameter at the target wavelength, and store the mapping relationship, namely, store the mapping parameter corresponding to each target wavelength. For ease of descriptions, subsequently, with one target wavelength as an example, subsequent steps are performed based on the calibrated ambient light spectrum and the calibrated target spectrum at the target wavelength.

At step 3052, for each target wavelength, based on the calibrated target spectrum at the target wavelength and the spectral reflectivity of the calibration object, a calibrated reference spectrum at the target wavelength is determined, where the calibrated reference spectrum may be a spectrum of the second ambient light, and the second ambient light is ambient light sensed by the target spectrum collection module 12.

For example, the calibrated target spectrum is obtained after the calibrated reference spectrum is reflected by the calibration object. Therefore, when the calibrated target spectrum and the spectral reflectivity of the calibration object are known, the calibrated reference spectrum can be determined, for example, by dividing the calibrated target spectrum by the spectral reflectivity.

At step 3053, for each target wavelength, based on the calibrated reference spectrum at the target wavelength and the calibrated ambient light spectrum at the target wavelength, a mapping parameter at the target wavelength is determined, and then the mapping parameter at the target wavelength is stored, where the mapping parameter is used to represent a mapping relationship between reference spectrum and ambient light spectrum.

In a possible implementation, the mapping relationship between reference spectrum and ambient light spectrum satisfies a function relationship, for example, *y*=*f(x,k),* where *f* represents a function relationship, and can be configured based on experiences. Further, f is a function relating to x and *k,* and the expression for the function relationship *f* is not limited herein, and can be configured randomly, for example, *f(x,k)*=*x*/*k.* Certainly, it is only a simple expression, and in practical applications, the function relationship *f* will be more complex. In the function relationship, y represents a reference spectrum, x represents an ambient light spectrum and *k* represents a mapping parameter between reference spectrum and ambient light spectrum.

In the above formula, y represents a reference spectrum which is a known value, namely, the calibrated reference spectrum at the target wavelength; x represents an ambient light spectrum which is also a known value, namely, the calibrated ambient light spectrum at the target wavelength; the function relationship *f* is already configured, where *k* is an unknown value, namely, a mapping parameter to be determined. Therefore, the calibrated reference spectrum y and calibrated ambient light spectrum x may be substituted into the formula *y*=*f(*x,*k)* to obtain the mapping parameter *k*.

In a possible implementation, the ambient light sensing module 11 may also collect position data, and send the position data to the data processing module 13. In the step 3053, the data processing module 13 may determine an angle parameter based on the position data, and based on the angle parameter, the calibrated reference spectrum and the calibrated ambient light spectrum, determine the mapping parameter, where the mapping parameter represents a mapping relationship among reference spectrum, ambient light spectrum and angle parameter. Illustratively, if the position data is pose information of the ambient light sensing module 11, the angle parameter may be a pose angle corresponding to the pose information, for example, the pose information is the pose angle of the ambient light sensing module 11, and thus the pose angle of the ambient light sensing module 11 can be directly determined; and/or, if the position data is longitude and latitude information of the ambient light sensing module 11, the angle parameter may be a zenith angle corresponding to the longitude and latitude information, for example, the zenith angle of the sun may be determined based on the longitude and latitude information of the ambient light sensing module 11, which is not limited herein. In addition to the zenith angle of the sun, the angle parameter may also include a zenith angle of the calibration object, for example, the zenith angle of the calibration object is pre-configured, for example, for vertically-down collection and horizontal collection, the zenith angle of the calibration object may be configured as 0 and 90 degrees.

For example, the mapping relationship among reference spectrum, ambient light spectrum and angle parameter satisfies the function relationship, for example, *y*=*f(x,k,p)*, where *f* represents a function relationship and can be configured based on experiences. Further, *f* is a function relating to *x*, *p* and *k,* and the expression for the function relationship *f* is not limited herein and can be configured randomly. In the function relationship, *x* represents an ambient light spectrum, *y* represents a reference spectrum and *k* represents a mapping parameter among angle parameter, reference spectrum and ambient light spectrum.

In the above function, *p* represents an angle parameter, and the angle parameter *p* may include at least one of the pose angle *p1* of the ambient light sensing module 11, the zenith angle *p2* of the sun, or the zenith angle *p3* of the calibration object, for example, *y*=*f(x,k,p1,p2,p3),* or *y*=*f(x,k,p1,p2),* or *y*=*f(x,k,p1,p3),* or *y*=*f(x,k,p2,p3),* or *y*=*f(x,k,p1),* or *y f(x,k,p2), or y f(x,k,p3).* Certainly, the above is only an example, and no limitation is made herein. For ease of descriptions, subsequent process is described with *y*=*f(x,k,p1,p2,p3)* as an example.

In the above formula, *y* represents a calibrated reference spectrum corresponding to a target wavelength, *x* represents a calibrated ambient light spectrum corresponding to a target wavelength, the function relationship *f* is already configured, *p1* represents a pose angle of the ambient light sensing module 11, *p2* represents a zenith angle of the sun, and *p3* represents a zenith angle of a calibration object. Apparently, *x, y, p1, p2* and *p3* all are known values and *k* is an unknown value, namely, the mapping parameter to be determined. Therefore, *x, y, p1, p2* andp3 are substituted into the formula *y*=*f(x,k,p1,p2,p3)* to obtain the mapping parameter *k*.

In a possible implementation, the above formula *y*=*f(x,k,p1,p2,p3)* may also be replaced *with y f(x,z,k,pl,p2,p3),* where z represents a spectral reflectivity of a whiteboard, which is a known value, and thus, *x, y, z, p1, p2* and *p3* can be substituted into the formula *y f(x,z,k,pl,p2,p3)* to obtain the mapping parameter k.

In a possible implementation, for the determination process of the mapping parameter, a mapping relationship model may be obtained, where the mapping relationship model may map the ambient light spectrum to a reference spectrum, so as to obtain the mapping parameter *k.*

For example, the ambient light sensing module 11 may collect a calibrated ambient light spectrum, where the calibrated ambient light spectrum is denoted as *x* (or as IE). Since inconsistency of many factors such as light homogenization path, lens transmittance, diffraction efficiency of split element, detector response, the number of spectral channels, and the spectral reflectivity of the whiteboard and the like is present in the spectral reflectivity measurement system, the reference spectrum is not equal to the calibrated ambient light spectrum x, and calibration for the mapping parameter is required, namely, a mapping relationship model between the reference spectrum *y* (also denoted as *Iref*) and the calibrated ambient light spectrum x is calibrated, where the mapping relationship model is used to represent an input-output relationship of the spectral reflectivity measurement system, for example, the mapping relationship model may be *y*=*f(x,p1,p2,p3,z,k).* In the above formula, the input-output relationship may be represented by *f*, where *f* is related to *x, p1, p2, p3, z, k* and the like, *x(IE)* represents an ambient light spectrum, *p1* represents a pose angle of the ambient light sensing module 11, *p2* represents a zenith angle of the sun, *p3* represents a zenith angle of a calibration object, z represents a spectral reflectivity of a whiteboard, *k* represents a mapping parameter, namely, a value to be determined in the determination process, and *y(Iref)* represents a reference spectrum. Obviously, the above mapping relationship model *y*=*f(x,p1,p2,p3,z,k)* represents a mapping relationship between ambient light spectrum and reference spectrum, and it is only required to calculate the mapping parameter *k*.

Of course, the above mapping relationship model *y*=*f(x,p1,p2,p3,z,k)* is only an example, and in practical applications, at least one parameter of *p1, p2, p3,* or z may also be removed. The mapping relationship model herein is not limited.

After the mapping parameter is obtained and then is stored, when the spectral reflectivity of the to-be-measured object is calculated subsequently, the reference spectrum may be obtained by performing direct mapping on the ambient light spectrum of the ambient light sensing module 11 and the mapping parameter without using the whiteboard again.

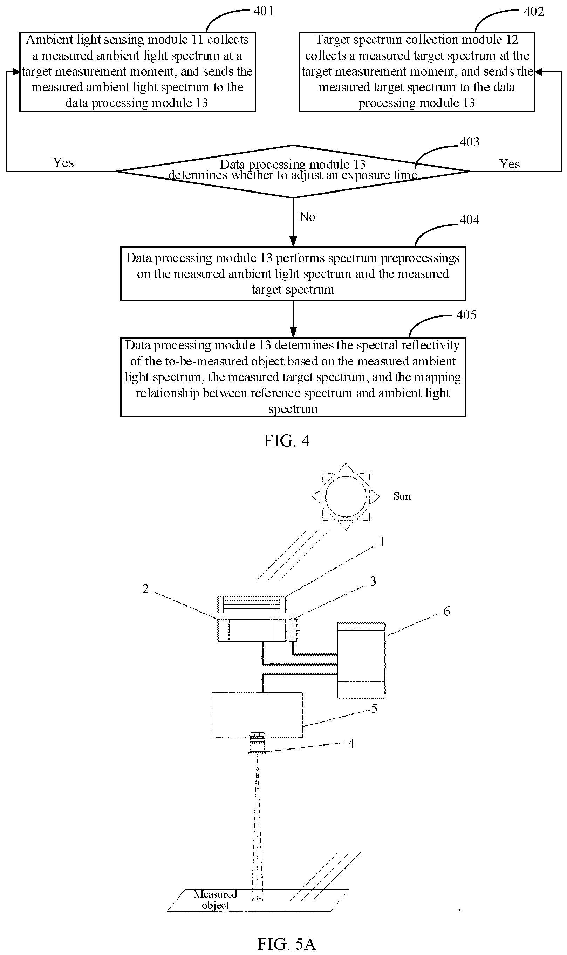

The calculation process of the spectral reflectivity of the to-be-measured object may include step 401 to 405, as shown in FIG. 4.

At step 401, the ambient light sensing module 11 collects measured ambient light spectrum at a target measurement time, and sends the measured ambient light spectrum to the data processing module 13, where the measured ambient light spectrum may be spectrum of the first ambient light, and the first ambient light is ambient light sensed by the ambient light sensing module 11.

At step 402, the target spectrum collection module 12 collects measured target spectrum at the target measurement time, and sends the measured target spectrum to the data processing module 13, where the measured target spectrum is spectrum reflected by the to-be-measured object for the second ambient light, and the second ambient light is ambient light sensed by the target spectrum collection module 12.

Illustratively, the to-be-measured object is an object with its spectral reflectivity to be calculated, which is not limited herein.

The target measurement time may be any time, for example, a time *t1*; the ambient light sensing module 11 may collect a measured ambient light spectrum at the time *t1,* and the target spectrum collection module 12 may collect a measured target spectrum at the time *t1.*

Illustratively, in an outdoor open environment, it is guaranteed that the collection range of the target spectrum collection module 12 and the sensing range of the ambient light sensing module 11 are consistent in ambient light illuminance, and the upper and lower light environments thereof are not blocked by shades; the to-be-measured object is placed within the collection range of the target spectrum collection module 12.

At step 403, the data processing module 13 determines whether to adjust an exposure time. If yes, the exposure time is adjusted, the data processing module 13 notifies the ambient light sensing module 11 to collect the measured ambient light spectrum based on the adjusted exposure time, that is, repeat the step 301, and also notifies the target spectrum collection module 12 to collect the measured target spectrum based on the adjusted exposure time, that is, repeat the step 302. If not, the exposure time is not adjusted, step 404 can be performed.

For example, after receiving multiple measured ambient light spectrum values and multiple measured target spectrum values, the data processing module 13 may determine a maximum spectrum value, i.e., a maximum spectrum value in all the measured ambient light spectrum values and all the measured target spectrum values. If the maximum spectrum value is less than a preset minimum spectrum value, the data processing module 13 adjusts a first exposure time to a second exposure time, where the second exposure time is greater than the first exposure time, and the first exposure time is an exposure time currently used by the ambient light sensing module 11 and the target spectrum collection module 12. Then, the data processing module 13 sends the second exposure time to the ambient light sensing module 11, such that the ambient light sensing module 11 collects measured ambient light spectrum based on the second exposure time, and sends the second exposure time to the target spectrum collection module 12, such that the target spectrum collection module 12 collects measured target spectrum based on the second exposure time. If the maximum spectrum value is greater than a preset maximum spectrum value, the first exposure time is adjusted to a third exposure time less than the first exposure time, and the third exposure time is sent to the ambient light sensing module 11, such that the ambient light sensing module 11 collects measured ambient light spectrum based on the third exposure time, and the third exposure time is further sent to the target spectrum collection module 12, such that the target spectrum collection module 12 collects measured target spectrum based on the third exposure time. If the maximum spectrum value is not less than the preset minimum spectrum value and not greater than the preset maximum spectrum value, it indicates that the first exposure time currently used by the ambient light sensing module 11 and the target spectrum collection module 12 is reasonable, and the step 404 can be performed.

At step 404, the data processing module 13 performs spectrum preprocessing such as data filtering and dark noise reduction and the like on the measured ambient light spectrum and the measured target spectrum, which is not limited herein.

At step 405, the data processing module 13 determines the spectral reflectivity of the to-be-measured object based on the measured ambient light spectrum, the measured target spectrum, and the mapping relationship between reference spectrum and ambient light spectrum.

In a possible implementation, the implementation process of the step 405 may include step 4051 to step 4053.

At step 4051, the measured ambient light spectrum and the measured target spectrum at the same target wavelengths are determined.

In a possible implementation, the ambient light sensing module 11 is configured to collect measured ambient light spectrum at each wavelength in the first wavelength set, and the target spectrum collection module 12 is configured to collect the measured target spectrum at each wavelength in the second wavelength set, where the first wavelength set is a subset of the second wavelength set. The data processing module 13 takes each wavelength in the second wavelength set as the target wavelength, and for each target wavelength: the measured target spectrum at the target wavelength is obtained from the target spectrum collection module 12; whether the target wavelength is existed in the first wavelength set is determined; if the target wavelength is existed in the first wavelength set, the measured ambient light spectrum at the target wavelength is obtained from the ambient light sensing module 11; if the target wavelength is not existed in the first wavelength set, based on the measured ambient light spectrum at at least two wavelengths collected by the ambient light sensing module 11, the measured ambient light spectrum at the target wavelength is determined. For example, a first matching wavelength and a second matching wavelength are selected from the first wavelength set, where the first matching wavelength is a wavelength closest to the target wavelength and less than the target wavelength in the first wavelength set, and the second matching wavelength is a wavelength closest to the target wavelength and greater than the target wavelength in the first wavelength set. Based on the measured ambient light spectrum at the first matching wavelength and the measured ambient light wavelength at the second matching wavelength, the measured ambient light spectrum at the target wavelength is determined.

The implementation process of the step 4051 is similar to the implementation process of the step 3051 and will not be repeated herein.

In conclusion, the measured ambient light spectrum and the measured target spectrum corresponding to each target wavelength may be obtained. For each target wavelength, based on the measured ambient light spectrum and the measured target spectrum at the target wavelength, subsequent steps are performed to obtain the spectral reflectivity at the target wavelength. For ease of descriptions, taking one target wavelength as an example, based on the measured ambient light spectrum and the measured target spectrum at the target wavelength, subsequent steps are performed.

At step 4052, based on the measured ambient light spectrum and a mapping parameter (i.e., a mapping parameter between reference spectrum and ambient light spectrum), a measured reference spectrum is determined, where the measured reference spectrum may be a spectrum of the second ambient light.

In a possible implementation, the mapping relationship between reference spectrum and ambient light spectrum may satisfy the function relationship, for example, *y*=*f(x,k),* where *f* represents a function relationship, which can be configured based on experiences, y represents a reference spectrum, x represents an ambient light spectrum, and *k* represents a mapping parameter between reference spectrum and ambient light spectrum.

At step 4052, since the mapping parameter *k* is a known value, and *x* represents a measured ambient light spectrum corresponding to a target wavelength, which is a known value, the mapping parameter *k* and the measured ambient light spectrum *x* are substituted into the formula *y*=*f(x,k)* so as to obtain a reference spectrum *y*, i.e., the measured reference spectrum at the target wavelength.

In a possible implementation, the ambient light sensing module 11 may also collect position data and send the position data to the data processing module 13. In the step 4052, the data processing module 13 may determine an angle parameter based on the position data, and based on the measured ambient light spectrum, the angle parameter and the mapping parameter, determine the measured reference spectrum, where the mapping parameter represents a mapping relationship among reference spectrum, ambient light spectrum and angle parameter. Illustratively, if the position data is pose information of the ambient light sensing module 11, the angle parameter may be a pose angle corresponding to the pose information, for example, the pose information is the pose angle of the ambient light sensing module 11, and thus the pose angle of the ambient light sensing module 11 can be directly determined; and/or, if the position data is longitude and latitude information of the ambient light sensing module 11, the angle parameter may be a zenith angle corresponding to the longitude and latitude information, for example, the zenith angle of the sun may be determined based on the longitude and latitude information of the ambient light sensing module 11, which is not limited herein. In addition to the zenith angle of the sun, the angle parameter may also include a zenith angle of the to-be-measured object, for example, the zenith angle of the to-be-measured object is pre-configured, for example, for vertically-down collection and horizontal collection, the zenith angle of the to-be-measured object may be configured as 0 and 90 degrees.

For example, the mapping relationship among reference spectrum, ambient light spectrum and angle parameter satisfies the function relationship, for example, *y*=*f(x,k,p)*, where *f* represents a function relationship which can be configured based on experiences, x represents an ambient light spectrum, *y* represents a reference spectrum, *k* represents a mapping parameter. In the function relationship, *p* represents an angle parameter, and the angle parameter *p* may include at least one of the pose angle *p1* of the ambient light sensing module 11, the zenith angle *p2* of the sun, and the zenith angle *p3* of the to-be-measured object, for example, *y*=*f(x,k,p1,p2,p3),* or *y*=*f(x,k,p1,p2)* or *y*=*f(x,k,p1,p3),* or *y*=*f(x,k,p2,p3),* or *y*=*f(x,k,p1)*, or *y*=*f(x,k,p2),* or *y*=*f(x,k,p3).* Certainly, the above is only an example, and no limitation is made herein. For ease of descriptions, subsequent process is described with *y*=*f(x,k,p1,p2,p3)* as an example.

In the above formula, *y* represents a measured reference spectrum corresponding to a target wavelength, *x* represents a measured ambient light spectrum corresponding to a target wavelength, *p1* represents a pose angle of the ambient light sensing module 11*, p2* represents a zenith angle of the sun, *p3* represents a zenith angle of a to-be-measured object and *k* represents a mapping parameter. Apparently, *x*, *k, p1, p2* and *p3* all are known values and *y* is an unknown value, namely, *y* is the measured reference spectrum to be determined. Therefore, *x, k, p1, p2* and *p3* are substituted into the formula *y*=*f(x,k,p1,p2,p3)* to obtain the measured reference spectrum y at the target wavelength.

In a possible implementation, the above formula *y*=*f(x,k,p1,p2,p3)* may also be replaced with the formula *y*=*f(x,z,k,p1,p2,p3),* where *z* represents a spectral reflectivity of a whiteboard which is a known value, namely, *x*, *k, z, p1, p2* and *p3* may be substituted into the formula *y f(x,z,k,pl,p2,p3)* to obtain the measured reference spectrum y.

Of course, the above mapping relationship model *y=f(x,z,k,p1,p2,p3)* is only an example, and in practical applications, at least one parameter of *p1*, *p2*, *p3*, or z may be removed, and the mapping relationship model is not limited.

In the above formula, the pose angle *p1* of the ambient light sensing module 11, the zenith angle *p2* of the sun, and the zenith angle *p3* of the to-be-measured object are used for correcting the inaccurate measured reference spectrum calculated in the cases of change of the pose of the ambient light sensing module 11, inconsistent pose of the to-be-measured object, or excessive change of the zenith angle of the sun or the like, so as to obtain a more accurate measured reference spectrum.

In conclusion, based on the measured ambient light spectrum at the target wavelength and the mapping parameter at the target wavelength (a mapping parameter between reference spectrum and ambient light spectrum), the measured reference spectrum at the target wavelength is determined.

At step 4053, based on the measured target spectrum and the measured reference spectrum, the spectral reflectivity of the to-be-measured object is determined. For example, the spectral reflectivity of the to-be-measured object may be calculated in the following formula *R=IO*/*Iref,* where *IO* represents the measured target spectrum at the target wavelength, *Iref* represents the measured reference spectrum at the target wavelength, and *R* represents the spectral reflectivity of the to-be-measured object at the target wavelength. In this way, the spectral reflectivity of the to-be-measured object is obtained.

In a possible implementation, after the spectral reflectivity of the to-be-measured object is obtained, substance parameter inversion may be further performed, namely, the data processing module 13 may introduce the spectral reflectivity into a corresponding inversion model based on an application scenario to perform inversion on the spectral reflectivity and obtain a parameter of the to-be-measured object relating to the spectral reflectivity.

In a possible implementation, the ambient light sensing module 11 may include at least a light homogenization path and a multispectral sensor, where the light homogenization path is coupled to the multispectral sensor; the ambient light goes through the light homogenization path for light homogenization processing, and then is transmitted to the multispectral sensor, and the multispectral sensor collects ambient light spectrum of multiple wavelengths.

For example, the light homogenization path can transmit and then homogenize the rays with different incidence angles, such that the transmitted light is diffusely scattered at multiple angles, which is unrelated to the incidence angle. The homogenized light is transmitted to the multispectral sensor. The multispectral sensor can measure the spectral intensities of multiple wave bands and receive the homogenized light. When the rays are incident on the light homogenization path at different angles, the light current output of the multispectral sensor conforms to cosine response. The multispectral sensor may be a multichannel photodiode, or a multichannel spectral sensor or a single-point optical fiber spectrometer.

Alternatively, the ambient light sensing module 11 includes at least a light homogenization path, an optical fiber and an optical fiber spectrometer. One end of the optical fiber is connected with the optical fiber spectrometer, and the other end of the optical fiber is connected with the light homogenization path. The ambient light goes through the light homogenization path for light homogenization processing, and then is transmitted through the optical fiber to the optical fiber spectrometer, and the optical fiber spectrometer collects ambient light spectrum of multiple wavelengths. Compared with the above manner, the multispectral sensor is replaced with the optical fiber spectrometer and the light homogenization path is connected with the optical fiber spectrometer via the optical fiber, other structures are similar to above manners. No redundant descriptions are made herein.

In the above manner, the number of wavelengths of the ambient light spectrum collected by the optical fiber spectrometer is greater than the number of the wavelengths of the ambient light spectrum collected by the multispectral sensor. For example, the optical fiber spectrometer can collect the ambient light spectrum of several hundred wavelengths whereas the multispectral sensor can collect the ambient light spectrum of dozens of wavelengths.

In a possible implementation, the ambient light sensing module 11 may further include a pose sensor (e.g., gyro sensor) and/or a position sensor (e.g., GPS). The pose sensor is used to collect pose information (e.g., a pose angle of the ambient light sensing module 11 relative to horizontal plane) and the position sensor is used to collect longitude and latitude information.

In a possible implementation, the target spectrum collection module 12 may include a lens and a hyperspectral imager. The lens can perform imaging or light reception on a target region, and may be connected with the hyperspectral imager directly or by an optical fiber, and also may be an imaging lens or a collimating lens or the like. The hyperspectral imager can obtain spectral information of different wave bands reflected or irradiated by the target region for which the lens performs imaging or light reception, that is, obtain target spectra. The hyperspectral imager may be a single-point optical fiber spectrometer, a push-broom imaging spectrometer or a staring imaging spectrometer.

For example, the target spectrum collection module 12 includes at least a lens and an optical fiber spectrometer (e.g., single-point optical fiber spectrometer). The lens is connected with the optical fiber spectrometer (directly connected or connected by an optical fiber). The lens can collect light formed after ambient light is reflected by the to-be-measured object and transmit the light to the optical fiber spectrometer, and the optical fiber spectrometer collects the target spectrum of multiple wavelengths. Alternatively, the target spectrum collection module 12 includes at least a lens and an imaging spectrometer (e.g., a push-broom imaging spectrometer or a staring imaging spectrometer). The lens is connected with the imaging spectrometer; this lens can collect light formed after ambient light is reflected by the to-be-measured object and transmit the light to the imaging spectrometer, and the imaging spectrometer collects the target spectrum of multiple wavelengths.

Descriptions will be made below about the connection relationships, structures and functions and the like of the ambient light sensing module 11, the target spectrum collection module 12 and the data processing module 13 in the embodiments of the present disclosure, with several specific application scenarios.

### Application scenario 1

As shown in FIG. 5A, 1 indicates the light homogenization path of the ambient light sensing module 11, which can transmit and homogenize the rays with different incidence angles; and hence the transmitted light is diffusely scattered at multiple angles, which is unrelated to the incidence angle. The homogenized light is transmitted to the multispectral sensor. 2 indicates the multispectral sensor of the ambient light sensing module 11, which can obtain the spectral intensities of multiple wavelengths and receive the homogenized light. When the light is incident on the light homogenization path at different angles, the light current output of the multispectral sensor conforms to cosine response, and the multispectral sensor can collect the spectrum of the target region (i.e., ambient light spectrum). 3 indicates the pose sensor (e.g., gyro sensor) and the position sensor (e.g., GPS), which can obtain the longitude and latitude information and the pose angle and the like of the ambient light sensing module 11. 4 indicates the lens of the target spectrum collection module 12, which has light reception function. 5 indicates the optical fiber spectrometer (e.g., single-point optical fiber spectrometer) of the target spectrum collection module 12, which is directly connected to the lens to collect the spectrum (i.e., target spectrum) of the target region. 6 indicates an industrial control board, namely, the data processing module 13, which controls the multispectral sensor, the pose sensor, the position sensor and the optical fiber spectrometer and the like, and has the capabilities of data reception, data processing, uploading and storage and the like.

As shown in FIG. 5A, the light homogenization path 1 is coupled to the multispectral sensor 2, that is, mounted vertically upward to exactly face toward the zenith, and the pose sensor and the position sensor 3 are consistent in pose with the light homogenization path 1 and the multispectral sensor 2. The lens 4 and the optical fiber spectrometer 5 are mounted vertically downward to collect the spectrum of the region below.

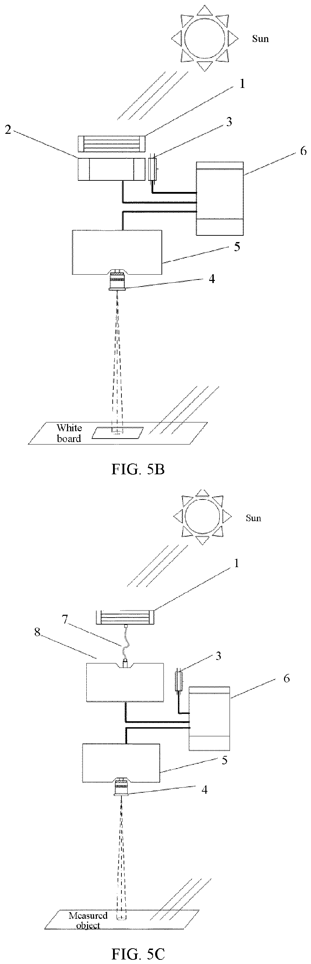

In different cases, the measured object may be the whiteboard or the to-be-measured object in the above embodiments. As shown in FIG. 5A, it is the case of the to-be-measured object and as shown in FIG. 5B, it is the case of the whiteboard.

The solar light can irradiate on the light homogenization path 1 and the measured object at the same time with the same solar irradiance. The solar light goes through the light homogenization path 1 and then is received by the multispectral sensor 2, so as to obtain the ambient light spectra. A light signal of the measured object is collected and received by the lens 4 and then split by the optical fiber spectrometer 5, so as to obtain the target spectra.

The industrial control board 6 receives data from the multispectral sensor 2, the optical fiber spectrometer 5, the pose sensor and the position sensor 3, and performs exposure control on the multispectral sensor 2 and the optical fiber spectrometer 5. After the exposure is completed, the data is preprocessed. After the preprocessing is completed, the ambient light spectrum is mapped to the reference spectrum based on the pre-calibrated mapping parameter, and then the spectral reflectivity is calculated based on the reference spectrum and the target spectrum.

### Application scenario 2

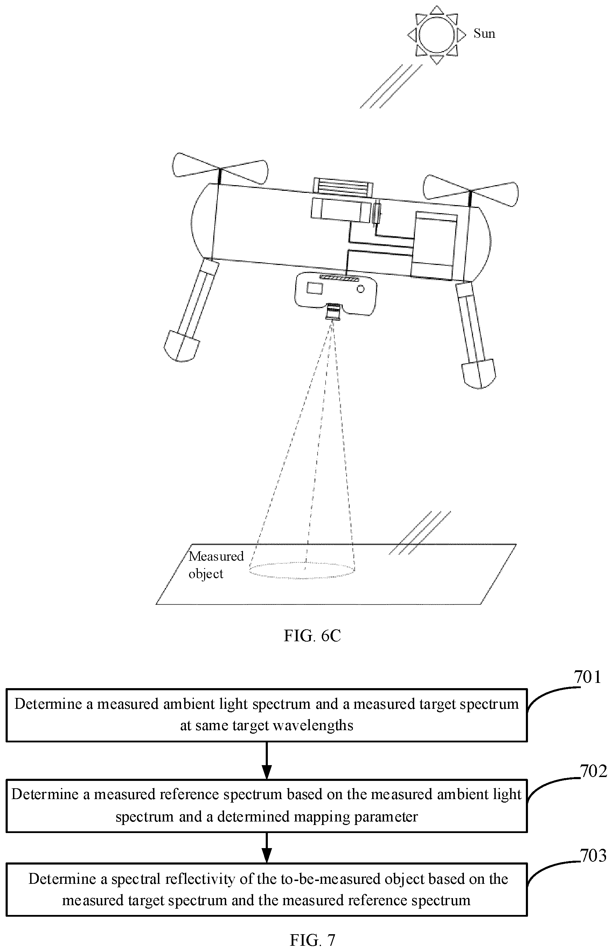

As shown in FIG. 5C, 7 is the optical fiber, and 8 is the single-point optical fiber spectrometer. This scenario differs from the application scenario 1 in that: the multispectral sensor may also be replaced with the single-point optical fiber spectrometer which has a larger number of collection channels (the number of the channels of the ambient light spectrum is larger). One end of the optical fiber 7 is connected with the optical fiber spectrometer 8 and the other end of the optical fiber is coupled to the light homogenization path 1 to collect ambient light. The ambient light goes through the light homogenization path 1 and the optical fiber 7 and then into the optical fiber spectrometer 8 for splitting, and finally the optical fiber spectrometer 8 obtains the ambient light spectrum.

In this application scenario, the processes of the calibration and the calculation of the spectral reflectivity are unchanged and no redundant descriptions are made herein.

### Application scenario 3

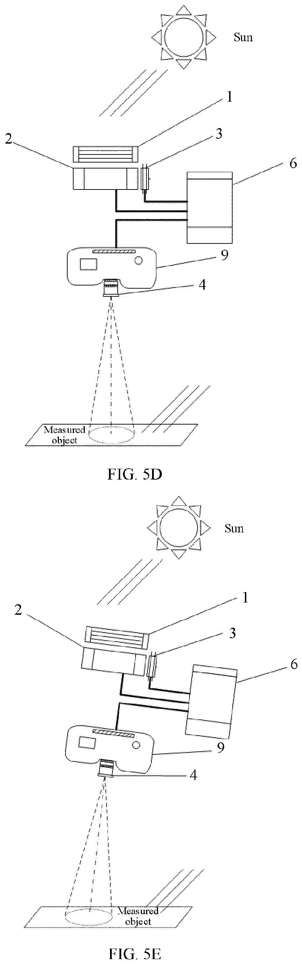

As shown in FIG. 5D, 9 is the imaging spectrometer. This scenario differs from the application scenario 1 in that: the single-point optical fiber spectrometer (hyperspectral imager) may also be replaced with the imaging spectrometer, and the imaging spectrometer 9 can obtain a hyperspectral image of the entire imaging region in combination with the lens 4. The lens 4 and the imaging spectrometer 9 are still mounted downward to collect a hyperspectral image of an imaging region below. The imaging spectrometer 9 may be a staring snapshot type imaging spectrometer and can obtain a hyperspectral image by reconstruction or rearrangement after one exposure. The imaging spectrometer 9 may be a staring adjustable filter type or a time-domain Fourier type imaging spectrometer, which can obtain a hyperspectral image by multiple exposures of time domain. The imaging spectrometer 9 may be a push-broom type imaging spectrometer which is internally or externally provided with a push-broom device to obtain a hyperspectral image by multiple exposures of space-domain push-broom.

In this application scenario, the processes of the calibration and the calculation of the spectral reflectivity are similar. In a calibration flow, when the mapping parameter is calculated, it is required to additionally extract the spectral data of the whiteboard region in the hyperspectral image. In the calculation flow of the spectral reflectivity, one hyperspectral reflectivity cube is obtained instead of one spectral reflectivity curve.

### Application scenario 4

As shown in FIG. 5E, it differs from the application scenario 1 or the application scenario 3 in that: the ambient light sensing module 11 or the entire spectral reflectivity measurement system may be tilted to an angle for operation. FIG. 5E shows that for the application scenario 3, the entire spectral reflectivity measurement system is tilted to an angle for operation or, only the ambient light sensing module 11 is tilted to an angle for operation. Alternatively, for the application scenario 1, the entire spectral reflectivity measurement system is tilted to an angle for operation, or the ambient light sensing module 11 is tilted to an angle for operation. No redundant descriptions are made herein.

The ambient light spectrum may be corrected based on a pose angle obtained from the pose sensor (e.g., gyro sensor), namely, the mapping parameter in the above embodiments may be related to the pose angle of the ambient light sensing module 11, and thus can be applied to the angle change resulting from change of external environment, for example, the angle change, resulting from waves, of the spectral reflectivity measurement system mounted on pontoon or ship.

### Application scenario 5

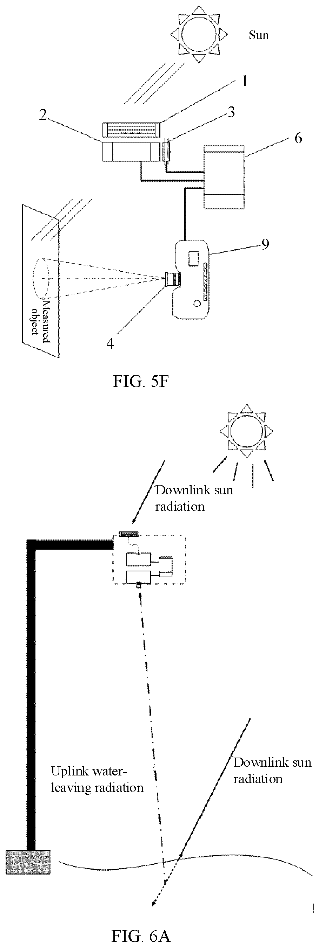

As shown in FIG. 5F, it differs from the application scenario 1 or the application scenario 3 in that: the target spectrum collection module 12 may be mounted horizontally or at another angle for operation to collect the target spectrum vertical to the ground, perform correction on the reference spectrum based on the angle of the to-be-measured object relative to the zenith, and obtain the spectral reflectivity under the current scenario, that is, the above mapping parameter may be related to the zenith angle of the to-be-measured object and the zenith angle of the sun.

FIG. 5F shows that, for the application scenario 3, the target spectrum collection module 12 is mounted horizontally or at another angle for operation, or for the application scenario 1, the target spectrum collection module 12 may also be mounted horizontally or at another angle for operation.

Certainly, the above applications scenarios 1 to 5 are only several examples of the connection relationships and structures of the ambient light sensing module 11, the target spectrum collection module 12 and the data processing module 13, which is not limited herein.

### Application scenario 6 for in-situ fixed-point water quality monitoring

As shown in FIG. 6A, it shows a practical scenario application based on the application scenario 2, the spectral reflectivity measurement system is applied to the application scenario of fixed-point in-situ water quality monitoring. Under the solar light, the solar light irradiates on the light homogenization material and the water body region at the same time, with the same solar irradiance. The solar light goes through the light homogenization path and then is received by the optical fiber spectrometer as ambient light spectra. The ambient light spectrum is mapped by the ambient light mapping relationship model (i.e., mapping parameter), and then the reference spectrum in the calculation of the spectral reflectivity is obtained. The uplink water-leaving radiation light signal of the water body is received by the lens and then received by the optical fiber spectrometer as the target spectrum in the calculation of the spectral reflectivity. The industrial control board calculates the spectral reflectivity of the water-leaving radiation and then inputs the spectral reflectivity into an introduced water body parameter inversion model to perform water quality inversion on the spectral reflectivity, so as to obtain a water quality parameter value of the current quality. The water quality inversion process is not limited herein, and all-weather in-situ online water quality monitoring can be achieved.

Illustratively, for the water quality parameter value of the current water quality, the indexes and ranges of the water quality parameter are as follows: chlorophyll a: 0 to 500 ug/L, total nitrogen: 0 to 20mg/L, total phosphorus: 0 to 2mg/L, transparency: 0 to 5m, potassium permanganate index: 0 to 20mg/L, turbidity: 0 to 1000NTU, ammonia nitrogen: 0 to 10 mg/L, suspended matter concentration: 0 to 300 mg/L, CDOM absorption coefficient: 0 to 30 m⁻¹, extinction coefficient C550: 0 to 100 m⁻¹ and the like.

Application scenario 7 for hyperspetral remote sensing of unmanned aerial vehicle.

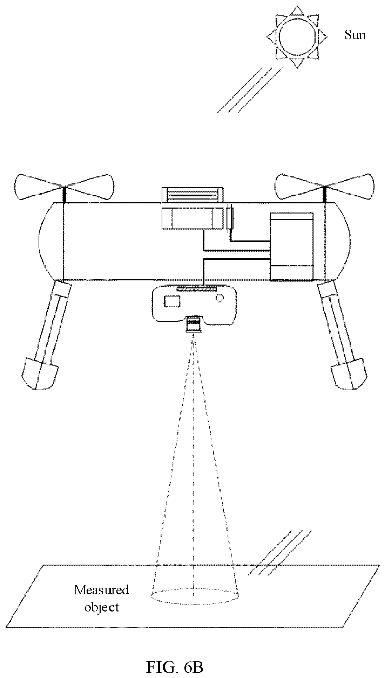

As shown in FIG. 6B, it shows a practical scenario application based on the application scenario 3, the spectral reflectivity measurement system is applied to the application scenario of the hyperspectral remote sensing of an unmanned aerial vehicle. When the unmanned aerial vehicle is under the solar light, the solar light irradiates on the light homogenization material and the target region at the same time, with the same solar irradiance. The solar light goes through the light homogenization path and then is received by the optical fiber spectrometer as ambient light spectra; after the ambient light spectrum is mapped by the ambient light mapping relationship model (i.e., mapping parameter), the reference spectrum in the calculation of the spectral reflectivity can be obtained. The light signal diffusely reflected by the object is received by the lens and then received by the hyperspectral camera (i.e., imaging spectrometer) as the target spectrum in the calculation of the spectral reflectivity. Due to use of the hyperspectral camera, the obtained target spectrum is linear-arrayed target spectrum or area-arrayed target spectrum. The industrial control board calculates a linear-arrayed spectral reflectivity or area-arrayed spectral reflectivity based on the entire linear-arrayed target spectrum or area-arrayed target spectrum in combination with the obtained reference spectra.

The spectral reflectivity measurement system is applied to the hyperspectral remote sensing of the unmanned aerial vehicle, and can obtain the reference spectrum stably in real time and thus the finally-obtained spectral reflectivity cube is free from the influence of the solar irradiance change. The calibration flow of the mapping relationship is similar to the above embodiments. A whiteboard is placed within a field of view of the hyperspectral camera, and the hyperspectral camera collects one frame of a hyperspectral image containing the whiteboard, and the ambient light sensing module 11 collects multispectral data of one frame of a current environment image. In the preprocessing stage, after the hyperspectral data of whiteboard region is extracted from one frame of the collected hyperspectral image, a model of an ambient light mapping relationship can be established to realize calibration of the mapping parameter.

Application scenario 8 for hyperspectral remote sensing of unmanned aerial vehicle.

As shown in FIG. 6C, it shows a practical scenario application based on the application scenario 4, the spectral reflectivity measurement system is applied to the application scenario of hyperspectral remote sensing of an unmanned aerial vehicle. FIG. 6C is a special state of FIG. 6B. When the unmanned aerial vehicle is in a tilted state, the pose sensor (e.g., gyro sensor) may sense a pose of the unmanned aerial vehicle and obtain a pose angle, and then add the information of the pose angle into the model of the ambient light mapping relationship based on the obtained pose angle, helping accurately obtain the reference spectrum and eliminating the error of the calculation of the spectral reflectivity resulting from the tilt.

It can be seen from the above technical solutions that in the embodiments of the present disclosure, a mapping parameter between reference spectrum and ambient light spectrum may be pre-determined, and thus the spectral reflectivity of the to-be-measured object can be accurately calculated, so as to realize fast, real-time, efficient and accurate acquisition of the spectral reflectivity of the to-be-measured object. In this way, the spectral reflectivity of the to-be-measured object can be obtained continuously in-situ and in real time in the wild, thus improving the convenience and the real-timeness of obtaining the spectral reflectivity of the ground object (i.e., the to-be-measured object) in the wild. During use, the spectral reflectivities under different weathers at different solar altitude angles can be obtained by simply using a calibration object (e.g., standard whiteboard) to perform one calibration (i.e., to determine the mapping parameter) without repeatedly collecting the data of the calibration object, and further, by calibrating the solar altitude angle and/or pose angle or the like, the calculation accuracy of the spectral reflectivities in multiple use cases can be improved. Therefore, the reference spectrum of the to-be-measured object under solar irradiation can be obtained efficiently and conveniently based on the ambient light sensing module and the calibrated ambient light mapping relationship (i.e., mapping parameter). Specifically, by using the ambient light sensing module and the target spectrum collection module, the reference spectrum under different weathers at different solar altitude angles can be obtained in a case of performing one calibration only at one time, automatically calculating the spectral reflectivity in real time can be achieved. Furthermore, by adjustment to the solar altitude angle and/or pose angle or the like, the calculation accuracy of the spectral reflectivity in multiple use cases may be improved. The ambient light sensing module includes a light homogenization path and a spectral sensor and has the characteristics of cosine response. The light current output of the spectral sensor conforms to the cosine response, namely, the light current generated at different incidence angles is equal to a product of a light current at the time of vertical incidence of light and a cosine of the incidence angle, eliminating the phenomenon in which reception cannot be performed or weakened due to large angle. Thus, the solar irradiation spectrum of the target region at different times at different solar altitude angles can be obtained. With only one target spectrum collection module and ambient light sensing module, the calculation of the spectral reflectivity can be performed. With the gyro sensor, the pose angle can be obtained to perform angle correction. Therefore, multiple mounting environments can be handled.

Based on the same application idea as the above spectral reflectivity measurement system, an embodiment of the present disclosure provides a spectral reflectivity measurement method, which is applied to a spectral reflectivity measurement system. As shown in FIG. 7, it is a flowchart illustrating a spectral reflectivity measurement method. The method includes step 701 to step 703.

At step 701, a measured ambient light spectrum and a measured target spectrum at the same target wavelengths are determined, where a collection time of the measured ambient light spectrum is same as a collection time of the measured target spectrum; the measured ambient light spectrum is a spectrum of the first ambient light and the measured target spectrum is a spectrum reflected by the to-be-measured object for the second ambient light.

Illustratively, the measured ambient light spectrum includes measured ambient light spectrum at each wavelength in the first wavelength set, and the measured target spectrum include measured target spectrum at each wavelength in the second wavelength set, where the first wavelength set is a subnet of the second wavelength set. Determining the measured ambient light spectrum and the measured target spectrum at the same target wavelengths includes but not limited to: taking each wavelength in the second wavelength set as the target wavelength, and for each target wavelength: obtaining the measured target spectrum at the target wavelength; and determining whether the target wavelength is existed in the first wavelength set; if yes, directly obtaining the measured ambient light spectrum at the target wavelength; if not, determining the measured ambient light spectrum at the target wavelength based on the measured ambient light spectrum at at least two wavelengths. For example, a first matching wavelength and a second matching wavelength are selected from the first wavelength set, where the first matching wavelength is a wavelength in the first wavelength set closest to the target wavelength and smaller than the target wavelength, and the second matching wavelength is a wavelength in the first wavelength set closest to the target wavelength and larger than the target wavelength; based on the measured ambient light spectrum at the first matching wavelength and the measured ambient light spectrum at the second matching wavelength, the measured ambient light spectrum at the target wavelength is determined.

In a possible implementation, a maximum spectrum value in the measured ambient light spectrum and the measured target spectrum may also be determined. If the maximum spectrum value is less than a preset minimum spectrum value, a first exposure time currently used is adjusted to a second exposure time, where the second exposure time is greater than the first exposure time; measured ambient light spectrum is collected based on the second exposure time, and measured target spectrum is collected based on the second exposure time.

If the maximum spectrum value is greater than a preset maximum spectrum value, the first exposure time currently used is adjusted to a third exposure time, where the third exposure time is less than the first exposure time; measured ambient light spectrum is collected based on the third exposure time, and measured target spectrum is collected based on the third exposure time.

At step 702, a measured reference spectrum is determined based on the measured ambient light spectrum and a determined mapping parameter, where the measured reference spectrum is a spectrum of the second ambient light, and the mapping parameter represents a mapping relationship between reference spectrum and ambient light spectrum, and is determined and stored in the process of determining the mapping parameter.

In a possible implementation, position data may also be collected, an angle parameter is determined based on the position data, and the measured reference spectrum is determined based on the measured ambient light spectrum, the angle parameter and the mapping parameter, where the mapping parameter represents a mapping relationship among reference spectrum, ambient light spectrum and angle parameter. Illustratively, if the position data is pose information of the spectral reflectivity measurement system, the angle parameter is a pose angle corresponding to the pose information; and/or, if the position data is longitude and latitude information of the spectral reflectivity measurement system, the angle parameter is a zenith angle corresponding to the longitude and latitude information, for example, a zenith angle of the sun.

At step 703, a spectral reflectivity of the to-be-measured object is determined based on the measured target spectrum and the measured reference spectrum.

In a possible implementation, the determining process of the mapping parameter (i.e., the calibration process) may include but not limited to: determining a calibrated ambient light spectrum and a calibrated target spectrum at the same target wavelengths, where a collection time of the calibrated ambient light spectrum is same as a collection time of the calibrated target spectrum, the calibrated ambient light spectrum is a spectrum of the first ambient light, and the calibrated target spectrum is a spectrum reflected by a calibration object for the second ambient light. Then, a calibrated reference spectrum is determined based on the calibrated target spectrum and a configured spectral reflectivity of the calibration object, where the calibrated reference spectrum is a spectrum of the second ambient light. Then, the mapping parameter is determined based on the calibrated reference spectrum and the calibrated ambient light spectrum.

Illustratively, the calibrated ambient light spectrum includes calibrated ambient light spectrum at each wavelength in the first wavelength set, and the calibrated target spectrum include the calibrated target spectrum at each wavelength in the second wavelength set, where the first wavelength set is a subnet of the second wavelength set. Determining the calibrated ambient light spectrum and the calibrated target spectrum at the same target wavelengths includes but not limited to: taking each wavelength in the second wavelength set as the target wavelength, and for each target wavelength: obtaining the calibrated target spectrum at the target wavelength; determining whether the target wavelength is existed in the first wavelength set; if yes, directly obtaining the calibrated ambient light spectrum at the target wavelength; if not, determining the calibrated ambient light spectrum at the target wavelength based on the calibrated ambient light spectrum at at least two wavelengths. For example, a first matching wavelength and a second matching wavelength are selected from the first wavelength set, where the first matching wavelength is a wavelength closest to the target wavelength and smaller than the target wavelength in the first wavelength set, and the second matching wavelength is a wavelength closest to the target wavelength and larger than the target wavelength in the first wavelength set; based on the calibrated ambient light spectrum at the first matching wavelength and the calibrated ambient light spectrum at the second matching wavelength, the calibrated ambient light spectrum at the target wavelength is determined.

In a possible implementation, a maximum spectrum value in the measured ambient light spectrum and the measured target spectrum may also be determined. If the maximum spectrum value is less than a preset minimum spectrum value, a first exposure time currently used is adjusted to a second exposure time, where the second exposure time is greater than the first exposure time; calibrated ambient light spectrum is collected based on the second exposure time, and calibrated target spectrum is collected based on the second exposure time.

If the maximum spectrum value is greater than a preset maximum spectrum value, the first exposure time currently used is adjusted to a third exposure time, where the third exposure time is less than the first exposure time; calibrated ambient light spectrum is collected based on the third exposure time, and calibrated target spectrum is collected based on the third exposure time.

In a possible implementation, for the determination process of the mapping parameter, position data may also be collected, an angle parameter is determined based on the position data, and the mapping parameter is determined based on the angle parameter, the calibrated reference spectrum, and the calibrated ambient light spectrum, where the mapping parameter represents a mapping relationship among reference spectrum, ambient light spectrum and angle parameter. If the position data is pose information of the spectral reflectivity measurement system, the angle parameter is a pose angle corresponding to the pose information; and/or, if the position data is longitude and latitude information of the spectral reflectivity measurement system, the angle parameter is a zenith angle corresponding to the longitude and latitude information.

For ease of descriptions, the above-mentioned devices, when described, is divided into various units by function for descriptions. Of course, when the present disclosure is implemented, the functions of the units can be implemented in one or more software and/or hardware.

Those skilled in the art should understand that the embodiments of the present disclosure may be provided as methods, systems, or computer program products. Therefore, the present disclosure may take the form of a pure hardware embodiment, a pure software embodiment, or an embodiment combining software and hardware. Furthermore, the embodiments of the present disclosure may take the form of a computer program product implemented on one or more computer available storage mediums (including but not limited to disk memories, CD-ROM, optical storage devices, etc.) containing computer available program codes.

The present disclosure is described with reference to the flowcharts and/or block diagrams of the methods, devices (systems), and computer program products disclosed in the embodiments of the present disclosure. It should be understood that each flow and/or block in the flowcharts and/or block diagrams and combinations of flows and/or blocks in the flowcharts and/or block diagrams may be implemented by computer program instructions. These computer program instructions may be provided to a processor of a general-purpose computer, a special-purpose computer, an embedded processing machine, or other programmable data processing devices to produce a machine, such that the instructions executed by the processor of the computer or another programmable data processing device generate an apparatus for implementing functions specified in one or more flows in the flowchart and/or in one or more blocks in the block diagram.

Furthermore, these computer program instructions may also be stored in a computer readable memory capable of directing a computer or another programmable data processing device to operate in a particular manner, such that the instructions stored in the computer readable memory generate a manufactured product including an instruction apparatus, where the instruction apparatus implements the functions specified in one or more flows in the flowchart and/or one or more blocks in the block diagram.

These computer program instructions can also be loaded onto a computer or another programmable data processing device, such that a series of operation steps may be performed on the computer or other programmable device to generate computer-implemented processing, and thus instructions executed on the computer or other programmable device provide steps for implementing the function specified in one or more flows in the flowchart and/or one or more blocks in the block diagram.

The above descriptions are only some embodiments of the present disclosure, and are not used to limit the present disclosure. For those skilled in the art, the present disclosure may have various changes and modifications. Any modifications, equivalent replacements, improvements, etc., made within the spirit and principle of this present disclosure shall fall within the scope of protection of the claims of the present disclosure.

## Claims

1. A spectral reflectivity measurement system, comprising an ambient light sensing module, a target spectrum collection module and a data processing module, wherein,
the ambient light sensing module is configured to collect a measured ambient light spectrum at a target measurement time, and send the measured ambient light spectrum to the data processing module, wherein the measured ambient light spectrum is spectrum of first ambient light, and the first ambient light is ambient light sensed by the ambient light sensing module;
the target spectrum collection module is configured to collect a measured target spectrum at the target measurement time, and send the measured target spectrum to the data processing module, wherein the measured target spectrum is spectrum reflected by a to-be-measured object for second ambient light, and the second ambient light is ambient light sensed by the target spectrum collection module; and
the data processing module is configured to determine the measured ambient light spectrum and the measured target spectrum at same target wavelengths, and determine a measured reference spectrum based on the measured ambient light spectrum and a determined mapping parameter, wherein the measured reference spectrum is a spectrum of the second ambient light; determine, based on the measured target spectrum and the measured reference spectrum, a spectral reflectivity of the to-be-measured object; wherein the mapping parameter refers to a mapping relationship between reference spectrum and ambient light spectrum.

2. The spectral reflectivity measurement system of claim 1, wherein,
the ambient light sensing module is configured to collect measured ambient light spectrum at each wavelength in a first wavelength set, and the target spectrum collection module is configured to collect measured target spectrum at each wavelength in a second wavelength set, wherein the first wavelength set is a subset of the second wavelength set; the data processing module, when determining the measured ambient light spectrum and the measured target spectrum at the same target wavelengths, is specifically configured to:
respectively take each wavelength in the second wavelength set as a target wavelength, and for each target wavelength:
obtain the measured target spectrum at the target wavelength from the target spectrum collection module; and
determine whether the target wavelength is existed in the first wavelength set; if the target wavelength is existed in the first wavelength set, obtain the measured ambient light spectrum at the target wavelength from the ambient light sensing module; if the target wavelength is not existed in the first wavelength set, determine the measured ambient light spectrum at the target wavelength based on the measured ambient light spectrum at at least two wavelengths collected by the ambient light sensing module.

3. The spectral reflectivity measurement system of claim 2, wherein,
the data processing module, when determining the measured ambient light spectrum at the target wavelength based on the measured ambient light spectrum at at least two wavelengths collected by the ambient light sensing module, is specifically configured to:
select a first matching wavelength and a second matching wavelength from the first wavelength set, wherein the first matching wavelength is a wavelength closest to the target wavelength and smaller than the target wavelength in the first wavelength set, and the second matching wavelength is a wavelength closest to the target wavelength and larger than the target wavelength; and
determine, based on a measured ambient light spectrum at the first matching wavelength and a measured ambient light spectrum at the second matching wavelength, the measured ambient light spectrum at the target wavelength.

4. The spectral reflectivity measurement system of claim 1, wherein, the data processing module is configured to: determine a maximum spectrum value in the measured ambient light spectrum and the measured target spectrum;
in response to determining that the maximum spectrum value is less than a preset minimum spectrum value, adjust a first exposure time currently used by the ambient light sensing module to a second exposure time, wherein the second exposure time is greater than the first exposure time; control the ambient light sensing module to collect the measured ambient light spectrum based on the second exposure time, and control the target spectrum collection module to collect the measured target spectrum based on the second exposure time;
in response to determining that the maximum spectrum value is greater than a preset maximum spectrum value, adjust the first exposure time currently used by the ambient light sensing module to a third exposure time, wherein the third exposure time is less than the first exposure time; control the ambient light sensing module to collect the measured ambient light spectrum based on the third exposure time, and control the target spectrum collection module to collect the measured target spectrum based on the third exposure time.

5. The spectral reflectivity measurement system of claim 1, wherein, the ambient light sensing module is configured to collect position data and send the position data to the data processing module;
the data processing module, when determining the measured reference spectrum based on the measured ambient light spectrum and the determined mapping parameter, is specifically configured to: determine, based on the position data, an angle parameter, and determine, based on the measured ambient light spectrum, the angle parameter and the mapping parameter, the measured reference spectrum; wherein the mapping parameter represents a mapping relationship among reference spectrum, ambient light spectrum and angle parameter; and
in response to determining that the position data is pose information of the ambient light sensing module, the angle parameter is a pose angle corresponding to the pose information; and/or, in response to determining that the position data is longitude and latitude information of the ambient light sensing module, the angle parameter is a zenith angle corresponding to the longitude and latitude information.

6. The spectral reflectivity measurement system of any one of claims 1 to 5, wherein,
the ambient light sensing module is configured to collect calibrated ambient light spectrum at a target calibration time, and send the calibrated ambient light spectrum to the data processing module, wherein the calibrated ambient light spectrum is spectrum of the first ambient light, and the first ambient light is ambient light sensed by the ambient light sensing module;
the target spectrum collection module is configured to collect calibrated target spectrum at the target calibration time, and send the calibrated target spectrum to the data processing module, wherein the calibrated target spectrum is spectrum reflected by a calibration object for the second ambient light, and the second ambient light is ambient light sensed by the target spectrum collection module;
the data processing module is configured to determine the calibrated ambient light spectrum and the calibrated target spectrum at same target wavelengths, and determine, based on the calibrated target spectrum and a configured spectral reflectivity of the calibration object, a calibrated reference spectrum, wherein the calibrated reference spectrum is a spectrum of the second ambient light; and
determine, based on the calibrated reference spectrum and the calibrated ambient light spectrum, the mapping parameter.

7. The spectral reflectivity measurement system of claim 6, wherein the ambient light sensing module is configured to collect position data and send the position data to the data processing module;
the data processing module, when determining the mapping parameter based on the calibrated reference spectrum and the calibrated ambient light spectrum, is configured to: determine, based on the position data, an angle parameter, and determine, based on the angle parameter, the calibrated reference spectrum and the calibrated ambient light spectrum, the mapping parameter; wherein the mapping parameter represents a mapping relationship among reference spectrum, ambient light spectrum and angle parameter;
in response to determining that the position data is pose information of the ambient light sensing module, the angle parameter is a pose angle corresponding to the pose information; and/or, in response to determining that the position data is longitude and latitude information of the ambient light sensing module, the angle parameter is a zenith angle corresponding to the longitude and latitude information.

8. The spectral reflectivity measurement system of any one of claims 1 to 5, wherein,
the ambient light sensing module comprises at least a light homogenization path and a multispectral sensor, wherein the light homogenization path is coupled to the multispectral sensor; the ambient light goes through the light homogenization path for light homogenization and then is transmitted to the multispectral sensor, and the multispectral sensor collects the measured ambient light spectrum of multiple wavelengths; or,
the ambient light sensing module comprises at least a light homogenization path, an optical fiber, and an optical fiber spectrometer, one end of the optical fiber is connected to the optical fiber spectrometer, and the other end of the optical fiber is connected to the light homogenization path; the ambient light goes through the light homogenization path for light homogenization processing and then is transmitted to the optical fiber spectrometer through the optical fiber, and the optical fiber spectrometer collects the measured ambient light spectrum of multiple wavelengths;
wherein a wavelength number of the measured ambient light spectrum collected by the optical fiber spectrometer is greater than a wavelength number of the measured ambient light spectrum collected by the multispectral sensor;
the ambient light sensing module further comprises a pose sensor and/or a position sensor, the pose sensor is configured to collect the pose information, and the position sensor is configured to collect the longitude and latitude information.

9. The spectral reflectivity measurement system of any one of claims 1 to 5, wherein,
the target spectrum collection module comprises a lens and an optical fiber spectrometer, and the lens is connected with the optical fiber spectrometer; the lens collects light formed after the ambient light is reflected by the to-be-measured object and then transmits the light to the optical fiber spectrometer, and the optical fiber spectrometer collects the measured target spectrum of multiple wavelengths; or,
the target spectrum collection module comprises a lens and an imaging spectrometer, and the lens is connected with the imaging spectrometer; the lens collects light formed after the ambient light is reflected by the to-be-measured object and then transmits the light to the imaging spectrometer, and the imaging spectrometer collects the measured target spectrum of multiple wavelengths.

10. A spectral reflectivity measurement method, comprising:
determining a measured ambient light spectrum and a measured target spectrum at same target wavelengths; wherein a collection time of the measured ambient light spectrum is same as a collection time of the measured target spectrum; wherein the measured ambient light spectrum is a spectrum of first ambient light, and the measured target spectrum is a spectrum reflected by a to-be-measured object for second ambient light;
determining, based on the measured ambient light spectrum and a determined mapping parameter, a measured reference spectrum, wherein the measured reference spectrum is a spectrum of the second ambient light, and the mapping parameter represents a mapping relationship between reference spectrum and ambient light spectrum; and
determining, based on the measured target spectrum and the measured reference spectrum, a spectral reflectivity of the to-be-measured object.

11. The method of claim 10, wherein,
the determination process of the mapping parameter comprises:
determining a calibrated ambient light spectrum and a calibrated target spectrum at same target wavelengths; wherein a collection time of the calibrated ambient light spectrum is same as a collection time of the calibrated target spectrum; wherein the calibrated ambient light spectrum is a spectrum of the first ambient light, and calibrated target spectrum is a spectrum reflected by a calibration object for the second ambient light;
determining, based on the calibrated target spectrum and a configured spectral reflectivity of the calibration object, a calibrated reference spectrum, wherein the calibrated reference spectrum is a spectrum of the second ambient light; and
determining, based on the calibrated reference spectrum and the calibrated ambient light spectrum, the mapping parameter.
